# EUROPÄISCHE PATENTANMELDUNG

(11) **EP 2 407 325 A1**
(43) Veröffentlichungstag der Anmeldung: **18.01.2012**
(21) Anmeldenummer: 11167190.5
(22) Anmeldetag: 24.05.2011
(51) Int. Cl.: B60H 1/00

(54) **Luftmischklappenanordnung**

(30) Priorität: 16.07.2010 DE 102010031475
(71) Anmelder: Behr GmbH & Co. KG, 70469 Stuttgart (DE)
(72) Erfinder: Komowski, Michael, 71263, Weil der Stadt (DE)
(74) Vertreter: Grauel, Andreas

(57) **Zusammenfassung**

Luttmischklappenanordnung (1, 13), insbesondere für eine Kraftfahrzeug-Klimaanlage, umfassend zumindest einen Abluftkanal (2, 14) und zumindest zwei Zuluftkanäle (3, 4, 15, 16), wobei die Luftmischung von der über die Zuluftkanäle (3, 4, 15, 16) in den Abluftkanal (2, 14) geleitete Luftströmung (L, L') über den ZuSuftkaneden (3, 4, 15, 16) zugeordnete Strömungssteuereinrichtungen erfolgt, und wobei die Strömungssteuereinrichtwigen als Steuerklappen (5, 6, 7, 17, 18, 19, 23, 24, 25), insbesondere als Schaukel-Klappe, ausgebildet sind, wobei jedem Zuluftkanal (3, 4, 15, 16) zumindest zwei Steuerklappen (5, 6, 7, 17, 18, 19, 23, 24, 25) zugeordnet sind, und wobei jede Steuerklappe (5, 6, 7, 17, 18, 19, 23, 24, 25) zumindest einen integrierten, in der Art einer Zarge ausgebildeten, Luftleitabschnitt (8, 9, 10, 20, 21, 27, 28, 29, 30, 31) aufweist.

## Beschreibung

Die Erfindung betrifft eine Luftmischklappenanordnung, insbesondere für eine Kraftfahrzeug-Klimaanlage, gemäß Anspruch 1.

Herkömmlicherweise wird in Luftfuhrungsgehausen eine Mehrzahl von Klappen verwendet, welche die Luftströmung in unterschiedlichen Luftkanälen steuern. Dies ist insbesondere der Fall, wenn eine geschichtete Strömung erzeugt werden soll, wofür Kaltluft und Warmluft unter Einer Temperaturschichtung gezielt bereichsweise gemischt und bereichsweise parallel zueinander geführt werden. Hierfür sind mehrere Luft" kanäle entsprechend ausgebildet, wobei die Klappen in denselben und in der Regel beabstandet voneinander angeordnet sind und in Abhängigkeit voneinander in der Regel einzeln oder gemeinsam angesteuert und beispielsweise über einen Stellmotor und entsprechende Stellorgane betätigt werden.

Durch die zumeist unvorteilhafte Ausgestaltung der Klappen kommt es jedoch aufgrund der "Äbrisskanten-Wirkung", d.h. aufgrund von Verwirbelungen des Luftstroms nach der Abrisskante zu erhöhten Geräuschausbildungen,

Es ist daher Aufgabe der Erfindung, eine verbesserte Luftmischidappenanordnung bereitzustellen, die die aus dem Stand der Technik bekannten Nachteile umgeht.

Diese Aufgabe wird gelöst durch eine Luftmischklappenanordnung mit den Merkmalen des Anspruchs 1. Vorteilhafte Ausgestaltungen sind Gegenstand der Unteransprüche.

Die erfindungsegmäße Luftmischklappenanordnung zeichnet sich dadurch aus, dass die Strömungssteuereinrichtungen a!s Steuerklappen, insbesondrere als Schaukel-Klappe, ausgebildet sind, wobei jedem Zuluftkanal zumindest zwei Steuerklappen zugeordnet sind, und wobei jede Steuerklappe zumindest einen integrierten, in der Art einer Zarge ausgebildeten, Luftleitabschnitt aufweist, Die Steuerklappen weisen somit in Strömtingsrichtung gesehen, sehr weiche Luftübergänge auf, Durch die im Wesentlichen gebogen bzw, gekrümmt in einem Radius verlaufenden Zargen kann die Luft "weicher" von den Zuluftkanälen in den Abluftkanal geleitet bzw, umgelenkt werden. Wesentlich ist, dass die Steuerklappen ohne Abrisskante ausgebildet sind bzw. keine Abrisskante ausbilden. Um die Wirkung der Abrisskante tatsächlich in allen möglichen Stellungen bzw. Ausbildungen der Steuerklappe zu vermeiden, wurden die Zargen in die Geometrie der Steuerklappe integriert, Bevorzugt, jedoch keinesfalls zwingend, kann die Steuerklappe einteilig ausgebildet sein,

Eine sieht vor, dass zwei benachbarten Zuluftkanälen insgesamt drei Steuerklappen zugeordnet sein können, wobei die Steuerklappen so zueinander angeordnet sind, dass sich durch gegenseitige Anlage zweier benachbarter Steuerklappen zumindest ein geschlossener und/oder ein geöffneter Zuluftkanal ergibt. Durch Verschwenken zumindest einer Steuerklappe kann zumindest ein Teilbereich des Zu!uftkana!s zur Luftdurchtritt freigegeben werden. Durch die erfindungsgemäße Luftmischklappenanordnung kann die Temperaturmischung bzw. die Absperrung aller oder einzelner Teilbereiche bzw. Zuluftkanäle mit einer sehr geringen Luftverwirbelung und somit akustisch vorteilhaft erfolgen.

Beispielsweise kann eine zwischen zwei seitlichen Steuerklappen angeordnete zentrale Steuerklappe so verschwenkt werden, dass sich in Wirkverbindung mit jeweils einer seitlichen Steuerklappe geöffnete und/oder verschlossene Zuluftkanäle aushi!den. Da die vorgeschlagene Anordnung mit zumindest drei Steuerklappen somit keine große bauliche Tiefe benötigt, und trotzdem die bereits genannten Vorteile sicher umsetzt, kann die Anordnung in allen engen βauräumen ohne Probleme eingesetzt werden. Grundsätzlich ist denkbar, dass jede zur Luftmischklappenanordnung gehörende Steuerklappe um zumindest 180 Grad verschwenkbar sein kann. Beispielsweise kann die zentrale Steuerklappe dabei jeweils um 90 Grad nach links und rechts bzw. in Richtung einer seitlichen Steuerklappe verschwenkt werden. Jeder Zuluftkanal wird somit über eine separate seitliche Steuerklappe und der gemeinsam genutzten zentralen Steuerklappe verschlossen bzw, geöffnet.

Beispielsweise kann sich der zumindest eine Luftleitabschnitt einer jeden Steuerklappe in Stromungsrichtung gesehen verjüngen, d,h, der von den Zuluftkanälen zum Abluftkanal geleitete Luftstrom würde sich verringern bzw. im Wesentlichen zentralisieren.

Ferner kann vorgesehen sein, dass sich der zumindest eine Luftleitabschnitt einer jeden Steuerklappe in Strömungsnchtung gesehen aufweiten kann, d.h. der von den Zu!uftRana!en zum Abluftkanal geleitete Luftstrom würde sich aufweiten bzw. im Wesentlichen auffächern.

Durch verschiedene Steuerkiappensteiiungen kann somit der Dijrchf!uss beispielsweiser warmer oder kalter Luft zu Temperierungszwecken auf einfa_{c}he Art und Weise eingestellt werden,

Eine weitere Ausführungsform sieht vor, dass an einer Steuerk!appe zumindest zwei Luftleitabschnitte vorgesehen sein können, wobei sich zumindest ein Luft!e!tabschn!tt in Strömungsnchiung gesehen verjüngen und sich zumindest ein Luftieitabschnitt in St_{f}ömungsnchtung gesehen aufweiten kann. Beispielsweise kann sich die Verteilung und die Anzahl und Ausbildung der Luftleitabschnitte nach dem zur Verfügung stehenden Bauraum innerhalb einer Klimatisierungs- oder Heizungseinheit richten.

Eine bevorzugte Atisfüliruiasform sieht vor, dass mehrere in einer Trag-oder Befestigungsstruktur angeordnete Steuerk!appen (Steuerklappenanordnung) zu einer gemeinsamen Baugruppe zusammengefasst werden können, Diese Ausführungsform kann sich unter Umständen bei großen Stückzahlen als vorteilhaft erweisen, da die Baugruppe mit den separaten Steuerklappen vorgefertigt bzw. vormontiert und als einheitliche Baugruppe verbaut werden kann.

Dabei können mehrere zusammen verbaute Steuerklappen voneinander abweichende Grundformen und/oder Luftleitabschnitte aufweisen. Beispielsweise können sich die Luftleitabschnitte bzw. Zargen insbesondere hinsichtlich ihrer relativen Radiengröße voneinander unterscheiden. Denkbar ist ferner, dass kleinere seitliche Steuer!<lappen mit einer größeren zentralen Steuerklappe oder umgekehrt größere seitliche Steuerklappen mit einer kleineren zentralen Steuerklappe kombiniert werden können, Die letztendliche Ausführungsfornₗ der einzelnen zusammenwirl<enden Steuerklappe richtet sich nach dem zur Verfügung stehenden Bauraum bzw. nach der Ausgestaltung des die Luftrnischk!appenanordnung umgebenden Gehäuses.

Eine weitere bevorzugte Ausführungsform sieht vor, dass die Steuerklappe, zumindest im Anlagebereich zu angrenzenden Steuerklappen, mit Dochtungselementen versehen sein kennen, um eine fluiddichte Abdichtung zweier benachbarter Steuerklappe zueinander sowie eine daraus resultierende fluiddichte Abdichtung der Zuluftkanäle bewirken zu können. 8ei" spielsweise können Abrolldichtungen (sogenannte Roll-Balge) vorgesehen sein. Beispielsweise können die Steue,klappen umlaufende Ausnehmungen bzw. Vertiefungen in die Dichtungen eingelegt sein können, Beispielsweise können die Steuerklappe selbst aus einem elastischen Material mit Dichtungseigenschaften bestehen.

Ferner ist denkbar, dass zumindest zwischen zwei benachbarten Steuerklappen Dichtungs" und/oder Zwischenstege vorgesehen sein können, die im Zusammenwirken mit den Steuerklappen eine fluiddichte Abdichtung der Zuluftkanäle bewirken können. Dabei können die Dichtungse!emente beispielsweise an den Steuerklappen und/oder Stegen angeordnet sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein,

Es zeigen:
- **Fig. 1**: die schematische Darstellung einer erfindungsgemaßen Luftmischklappenanordnung mit uhterschiedlichen Steuerklappenstellungen gezeigt in den Abbildungen A bis D;
- **Fig.2**: eine weitere Ausführungsform einer schematisch dargestellten Luftmischklappenanordnung gezeigt in den Abbildungen E und F; und
- **Fig. 3**: eine als Baugruppe ausgebildete Steuerklappenanordnung.

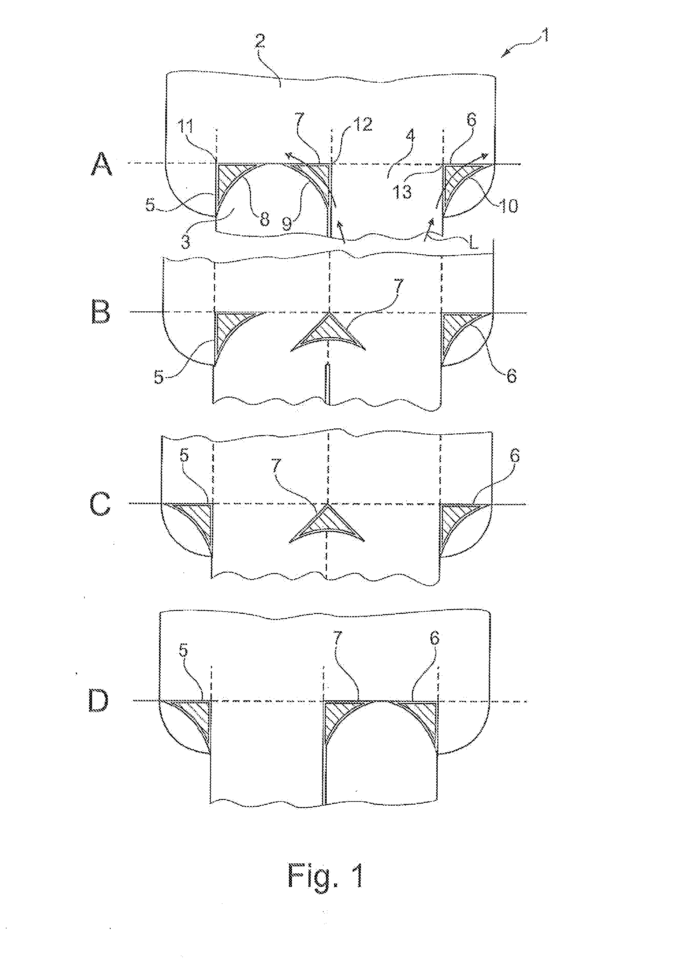

Fig. 1 zeigt in den Abbildungen A bis D eine Luftmischklappenanordnung 1 umfassend einen Abluftkanal 2 sowie zwei Zu_{!}uftkanä!e 3 und 4. Jedem Zuluftkanal 3 und 4 sind zwei seitliche separate SteuerMappen 5, 6 sowie eine zentrale Steuerklappe 7 zugeordnet. Die Steuerklappen 5, 6, 7 sind als Schaukel-Klappe ausgebildet und weisen jeweils einen in der Art einer Zarge ausgebildeten Luffleitabschtiitt 8, 9, 10 auf. Die Radien der Luftiestabschnitte 8, 9, .10 sind hierbei im Wesentlichen gleich ausgebildet. Die Steuerklappen 5, 6, 7 sind über Achsen 11 , 12, 13 schwenkbar gelagert.

Abbildung A zeigt die Luftmischklappenanordnung 1 mit durch die Steuerk!appen 5 und 7 verschlossenem Zuluftkanal 3. Die Steuerklappen 5, 7 sind in ihrer Schließstellung im Wesentlichen spiegelbildlich zueinander angeordnet. Die dem Zuluftkanal 4 zugeordnete seitliche Steuerklappe 6 befindet sich in einer geöffneten Stellung. Gleichzeitig befindet sich die zentrale Steuerklappe 7 für den Zuluftkanal 4 in einer geöffneten Stellung (bei gleichzeitiger Schliefbstellung für den Zuluftkanal 3). Der durch den Zuluftkanal 4 geleitete Luftstrom L kann über die Zargen bzw, über die Luftzeitabschnitte 9, 10 ohne "Abrisskanten-Wirkung" in den Abluftkanal 2 geleitet werden,

Abbildung B zeigt die Steuerklappen 5, 6, 7 in einer veränderten Klappenstellung. Die zentrale Steuerklappe 7 ist gleichmäßig zwischen den seitlichen Steuerklappen 5, 6 angeordnet, Die seitliche Steuerklappe 5 befindet sich in Schließstellung während die seitliche Steuerklappe 6 geöffnet ist. Abbildung C zeigt die Steuerklappen 5, 6, 7 in einer nochmals veränderten Klappenstellung, Die zentrale Steuerklappe 7 ist unverändert ausgerichtet, während sich die seitlichen Steuerklappen 5, 6 jeweils in Offnungsstellung befinden. Abbildung D zeigt die gegenteilige Klappenstellung zu Abbildung A. Während sich die Steuerklappen 5 und 7 (bei gleichzeitiger SchHef5ste_{H}ung für den Zuluftkanal 4) in Öffnungsstellung befinden, befindet sich die Steuerklappe 6 in Schließstellung.

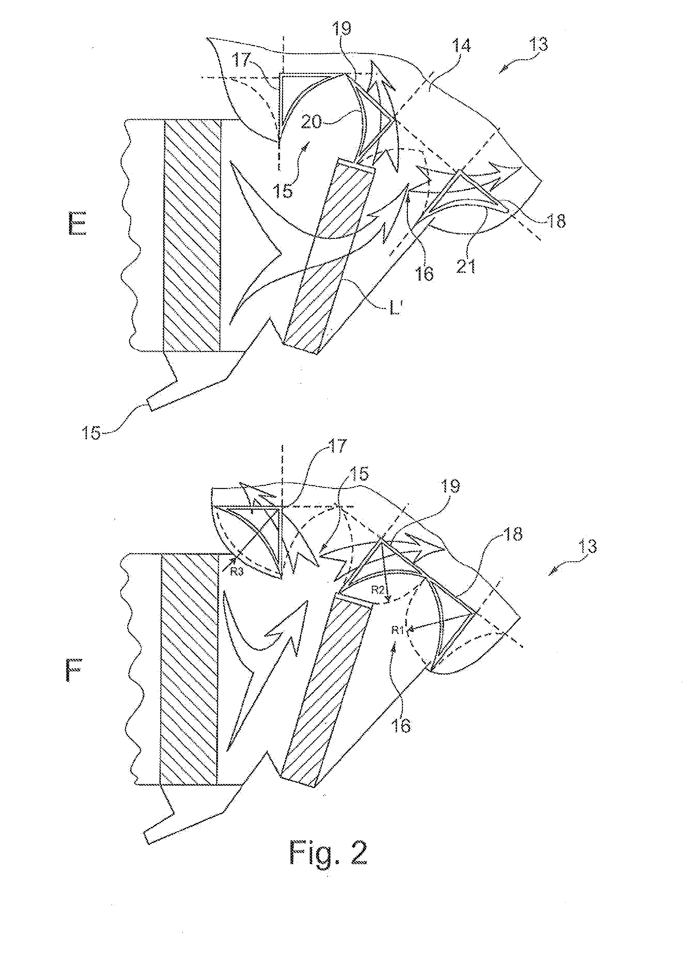

Fig. 2 zeigt in den Abbildungen E und F eine Luft'mischkJappenanordnung 13 umfassend einen Abluftkanal 14 sowie zwei Zuluftkanäle 15 und 16. Jedem Zuluftkanal 15 und 16 sind zwei seitliche separate Steuerklappen 17, 18 sowie eine zentrale Steuerklappe 19 zugeordnet.

Bei der in Abbildung E gezeigten Klappenstellung befindet sich der Zuluftkanal 15 in einer durch die Steuerklappe 17 und 19 (bei gleichzeitiger Öffnungsstellung für den Zuluftkanal 16) bewirkten Schlieβstellung, während sich der Zuluftkanal 16 durch die Klappenstellwigen der Steuerklappe 18 und 19 in einer geöffneten Stellung befindet Der Luftstrom L' kann über die Zargen bzw. Luftleitabschnitte 20, 21 weich in den Abluftkanal 14 geleitet werden, Weich bedeutet hierbei, dass die Einleitung des Luftstroms L' ohne "Abrisskanten-Wirkung" erfolgt, und es bedingt durch die Zargen zu einer aerodynamisch günstigen, verwirbelungsfreien und leisen Einleitung des Luftstroms L' vom Zuluftkanal 16 in den Abluftkanal 14 kommt. Abbildung F zeigt die Luftmischklappenanordnung 13 mit eher zu Abbildung E entgegengesetzt ausgebildeten Klappenstellung der Steuerklappen 17, 18, 19, wodurch sich ein geschlossener Zuluftkanal 16 und ein geöffneter Zuluftkanal 15 ergibt.

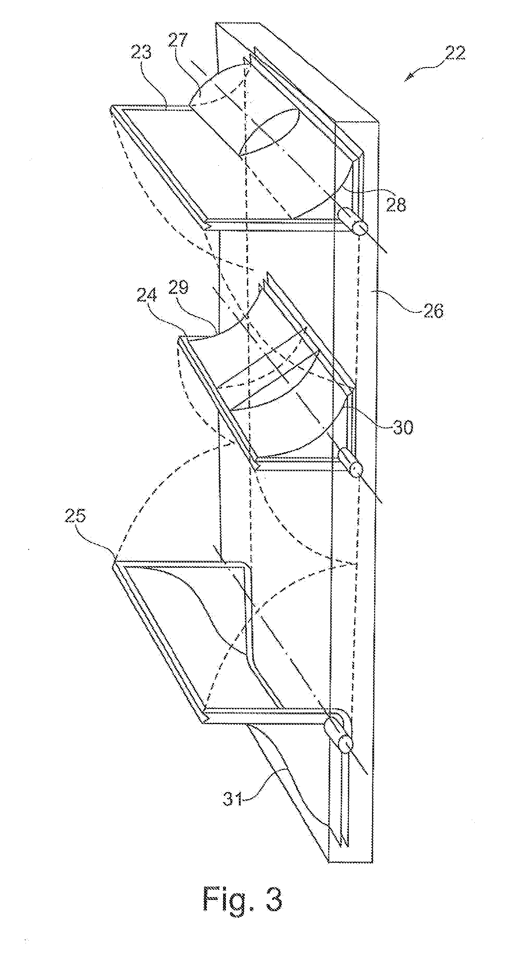

Fig. 3 zeigt eine als Baugruppe ausgebildete Steuerklappenanordnung 22, Die Steuerkiappenanordnung 22 umfasst drei unterschiedlich zueinander ausgebildete Steuerklappen 23, 24, 25 welche schwenkbar in einer Trag-und Befestigungsstruktur 26 angeordnet sind. Die Steuerklappe 23 verfügt über gegenläufig angeordnete Luftleitabschnitte 27 und 28. Die Steuerklappe 24 ist mit gleichläufigen Luftleitabschnitten 29, 30 versehen, Die Steuerklappe 25 weist lediglich einen Luftieitabschnitt 31 auf. Alle an den Steuerklappen 23, 24, 25 vorgesehenen Luftieitabschnitte 27, 28, 29, 30, 31 sind zargenförmig bzw. in der Art einer Zarge ausgebildet

Die Steuerklappen 23, 24, 25 weisen unterschiedliche Grundformen auf, wobei das Wirkprinzip bzw. die Funktionsweise dem in den Fig. 1 und 2 beschriebenen Wirkprinzip entspricht,

## Patentansprüche

1. Luftmischkiappenanordnung (1, 13), insbesondere für eine Kraftfahrzeug-Klimaanlage, umfassend zumindest einen Abluftkanal (2, 14) und zumindest zwei Zuluftkanäle (3, 4, 15, 16), wobei die Luftmischung von der über die Zuluftkanäle (3, 4, 15, 16) in den Abluftkanal (2, 14) geleiteten Luftströmung (L, L') über den Zuluftkanälen (3, 4, 15, 16) zugeordnete Strömungssteuereinrichtungen erfolgt, **dadurch gekennzeichnet, dass** die Ströniuiigssteuereirtrichtungen als Steuerklappen (5, 6, 7, 17, 18, 19, 23, 24, 25), insbesondere als Schaukel-Klappe, ausgebildet sind, wobei jedem Zuluftkanal (3, 4, 15, 16) zumindest zwei Steuerklappen (5, 6, 7, 17, 18, 19, 23, 24, 25) zugeordnet sind, und wobei jede, Steuerklappe (5, 6, 7, 17, 18. 19, 23, 24, 25) zumindest einen integrierten, in der Art einer Zarge ausgebildeten, Luftieitabschnitt (8, 9, 10, 20, 21, 27. 28, 29. 30, 31) aufweist.

2. Luftmischkjappenanordnung nach Anspruch 1, **dadurch gekennzeichnet, dass** zwei benachbarten Zuluftkanälen (3, 4, 15, 16) insgesamt drei Steuerklappen (5, 6, 7, 17, 18, 19, 23, 24, 25) zugeordnet sind, wobei die Steuerklappen (5, 6, 7, 17, 18, 19, 23, 24, 25) so zueinander angeordnet sind, dass sich durch gegenseitige Anlage zweier benachbarter Steuerklappen (5, 6, 7, 17, 18, 19, 23, 24, 25) zumindest ein geschlossener und/oder ein geöffneter Zuluftkanal (3, 4, 15, 16) ergibt.

3. Luftmichklappenanordnung nach Anspruch 1 oder 2, **dadurch gekennzeichnet, dass** eine zwischen zwei seitlichen Steuerklappen (5, 8, 7, 17, 18, 19, 23, 24, 25) angeordnete zentrale Steuerklappe (5, 6, 7, 17, 18, 19, 23, 24, 25) so verschwenkt werden kann, dass sich in Wirkverbindung mit jeweils einer seitlichen Steuerklappe (5, 6, 7, 17, 18, 19, 23, 24, 25) geöffnete und/oder verschlossene Zuluftkanäle (3, 4, 15, 16) ausbilden.

4. Luftmischklappenanordnung nach einem der Ansprüche 1 bis 3, **dadurch gekennzeichnet, dass** sich der zumindest eine Luftleitabschnitt (8,9,10,20,21,27,28,29,30,31) einer jeden Steuerklappe (5, 6, 7, 17, 18, 18, 23, 24, 25) in Strömungsrichtung gesehen verjüngt

5. Luftrmschktappenanordnung nach einem der Ansprüche 1 bis 3, **dadurch gekennzeichnet, dass** sich der zumindest eine Luflleitabschnitt (8, 9, 10, 20, 21, 37, 28, 29, 30. 31) einer jeden Steuerklappe (5,6,7, 17, 18, 19, 23, 24, 25) in Strömungsrichtung gesehen aufweitet.

6. Luftmischklappeiianordtnung nach einem der Ansprüche 1 bis 3, **dadurch gekennzeichnet, dass** an der Steuerklappe (5, 6, 7, 17, 1 8, 19, 23, 24, 25) zumindest zwei Luftleitabschnitte (8, 9, 10, 20, 21, 27, 28, 29, 30, 311 vorgesehen sind, wobei sich zumindest ein Luftleitabschnitt (8, 9, 10. 20, 21, 27, 28, 29, 30, 31) in Strömungsrichtung gesehen verjüngt und sich zumindest ein Luftleitabschnitt (8, 9, 10, 20, 21, 27, 28, 29, 30, 31) in Strämungsrichtung gesehen aufweitet.

7. Luftmischk!appertanördnung nach einem der Ansprüche 1 bis 6, **dadurch gekennzeichnet, dass** mehrere in einer Trag- oder Befestigungsstruktur (26) angeordnete Steuerklappen (5, 6, 7, 17, 18, 19, 23, 24, 25) zu einer gemeinsamen Baugruppe (Steuerklappenänordnung 22) zusammengefasst Sind.

8. Luftmlschklappenanordnung nach einem der Ansprüche 1 bis 7, **dadurch gekennzeichnet, dass** mehrere zusammen verbaute Steuerklappen (5, 6, 7, 17, 18, 19, 23, 24, 25) voneinander abweichende Grundformen und/oder Luftleitabschnitte (8, 9, 10, 20, 21, 27, 28, 29, 30, 31) aufweisen.

9. Luftmischklappenanordnung nach einem der Ansprüche 1 bis 8, **dadurch gekennzeichnet, dass** die Steuerklappen, zumindest im Anlagebereich zu angrenzenden Steuerklappen (5, 6, 7, 17, 18, 19, 23, 24, 25), mit Dichtungselementen versehen sind, die eine fluiddichte Abdichtung zweier benachbarter Steuerklappen (5, 6, 7,17, 18,19,23,24,25) zueinander sowie eine daraus resultierende fluiddichte Abdichtung der Zuluftkanäle (3, 4, 15, 16) bewirken.

10. Luftmischklappenanordnung nach einem der Ansprüche 1 bis 9, **dadurch gekennzeichnet, dass** zumindest zwischen zwei benachbarten Steuerklappen (5, 6, 7, 17, 18, 19, 23, 24, 25) Dichtungs- und/oder Zwischenstege vorgesehen sind, die im Zusammenwirken mit den Steuerklappen (5, 6, 7. 17, 18, 19, 23, 24, 25) eine fiuiddichte Abdichtung derZuluftkanäle (3, 4, 15, 16) bewirken.
